Europäisches Patentamt

European Patent Office

Office européen des brevets

(11) Numéro de publication : **0 362 570 B1**

(12) **FASCICULE DE BREVET EUROPEEN**

(45) Date de publication du fascicule du brevet :
**30.12.92 Bulletin 92/53**

(51) Int. Cl.⁵ : **D02G 3/38, D02G 3/48, D02G 3/12, B60C 9/00**

(21) Numéro de dépôt : **89116602.7**

(22) Date de dépôt : **08.09.89**

(54) **Assemblage à couches de fils concentriques.**

(30) Priorité : **28.09.88 FR 8812779**

(43) Date de publication de la demande :
**11.04.90 Bulletin 90/15**

(45) Mention de la délivrance du brevet :
**30.12.92 Bulletin 92/53**

(84) Etats contractants désignés :
**AT BE CH DE ES FR GB GR IT LI LU NL SE**

(56) Documents cités :
**EP-A- 0 133 205
FR-A- 1 361 703
GB-A- 2 018 323
US-A- 3 601 970
US-A- 4 651 514
US-A- 4 660 364**

(73) Titulaire : **MICHELIN & CIE (Compagnie Générale des Etablissements Michelin) Société dite:
4 rue du Terrail
F-63040 Clermont-Ferrand (FR)**

(72) Inventeur : **Penant, Christophe
19, rue de L'Echelon
F-63119 Chateaugay (FR)**

(74) Mandataire : **Doussaint, Jean-Marie et al
MICHELIN & CIE Service K. Brevets
F-63040 Clermont-Ferrand Cedex (FR)**

EP 0 362 570 B1

## Description

L'invention concerne les assemblages de fils, notamment métalliques, utilisés pour renforcer des matières plastiques et/ou des caoutchoucs.

De tels assemblages de renfort sont utilisés pour réaliser des articles qui sont par exemple des nappes de renfort, des courroies, des tuyaux, des enveloppes de pneumatiques, cf. par exemple US-A-3 601 970.

L'invention concerne en particulier de tels assemblages comportant au moins deux couches de fils concentriques, chaque couche étant un ensemble de fils enroulés en hélice dans le même sens avec le même pas et le même rayon de pose qui correspond au rayon de la couche. Deux de ces couches sont dites adjacentes si les fils d'une couche sont en contact avec ceux de l'autre couche.

L'expérience montre que lorsque de tels assemblages à couches sont soumis, par le fonctionnement de l'article qu'ils renforcent, à de nombreuses et intenses sollicitations de tension et à de nombreuses et intenses variations de courbure, il se produit une fatigue et une usure à l'intérieur des assemblages, notamment par suite des contacts entre couches adjacentes.

Cette fatigue interne se manifeste par des ruptures de fils.

Cette usure interne, quant à elle, se produit aux zones de contact entre les fils, par suite des pressions de contact et des mouvements relatifs entre ces fils. Elle peut être quantifiée par la mesure de la réduction de la force de rupture des fils extraits d'assemblages homologues provenant d'articles renforcés neufs d'une part et d'articles sollicités par un usage déterminé d'autre part.

Le but de l'invention est de proposer un assemblage à couches dans lequel les pas et les sens d'enroulement des couches adjacentes sont définis par des relations nouvelles qui permettent de réduire considérablement la fatigue et l'usure internes de l'assemblage, pour un même renforcement et un même usage de l'article renforcé.

En conséquence, l'invention concerne un assemblage de fils pour renforcer un article en matière plastique et/ou en caoutchouc, cet assemblage, qui comporte au moins deux couches de fils, étant caractérisé par les points suivants :

a) il comporte au moins deux couches concentriques et adjacentes de fils autour d'un axe commun, chaque couche comportant au moins deux fils, celle de ces deux couches la plus proche de l'axe étant référencée "i" et celle de ces deux couches la plus éloignée de l'axe étant référencée "j" ; en coupe plane perpendiculaire à cet axe, dans chacune de ces deux couches les fils ont leurs axes disposés pratiquement sur un cercle, les rayons de ces cercles étant référencés $R_i$ pour la couche "i" et "$R_j$ pour la couche "j" ; dans chacune de ces deux couches, les fils sont enroulés dans le même sens et avec le même pas, ces pas étant référencés respectivement $P_i$ pour la couche "i" et $P_j$ pour la couche "j" ;

b) les couches "i" et "j" ont le même sens d'enroulage ;

c) $R_i$, $R_j$, $P_i$, $P_j$ vérifient la relation :

$$P_i > P_j > P_i \times [1 - 2 (R_j - R_i)/R_j]$$

$R_i$, $R_j$, $P_i$, $P_j$ étant exprimés avec la même unité de longueur.

De préférence on a pratiquement la relation $P_j = P_i \times (R_i/R_j)$

L'invention concerne également les assemblages complexes comportant au moins deux assemblages de fils dont au moins un est conforme à la définition précédente.

L'invention concerne également les articles renforcés par les assemblages ou les assemblages complexes conformes a l'invention, ces articles étant notamment des nappes de renfort, des courroies, des tuyaux, des enveloppes de pneumatiques.

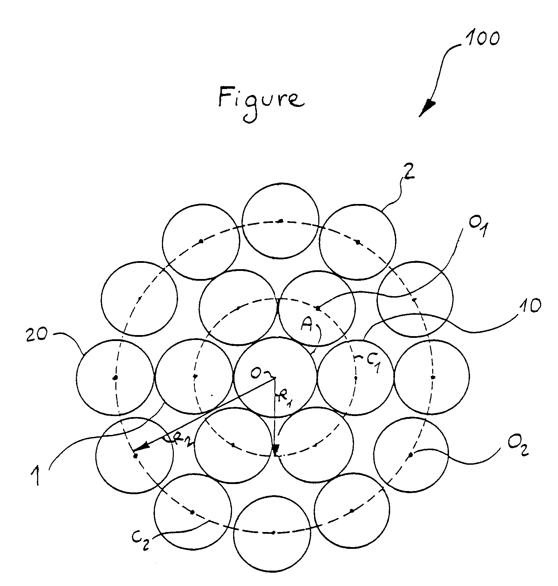

L'invention sera aisément comprise à l'aide de l'exemple non limitatif qui suit et de la figure schématique relative à cet exemple qui représente en coupe un assemblage conforme à l'invention.

L'assemblage 100 représenté sur cette figure est un toron constitué par dix neuf fils. Un de ces fils, référencé A, sert d'âme, l'axe de ce fil, représenté par O sur la figure étant l'axe de l'assemblage 100, la figure étant une coupe perpendiculaire à cet axe O qui est supposé rectiligne. Les autres fils sont disposés selon deux couches adjacentes et concentriques, soit la couche 1, comportant six fils 10, et située le plus près de l'axe O et adjacente à l'âme A, et la couche 2, comportant douze fils 20, située à l'extérieur de la couche 1 et adjacente à cette couche 1.

Les fils 10 de la couche 1 ont leurs axes $O_1$ disposés pratiquement sur un cercle $C_1$ représenté en pointillés sur la figure, le rayon de ce cercle $C_1$ étant référencé $R_1$. Les fils 20 de la couche 2 ont leurs axes $O_2$ disposés pratiquement sur un cercle $C_2$ de rayon $R_2$. Les cercles $C_1$, $C_2$ ont le même centre O. Pour la clarté du dessin seuls un fil 10, un axe $O_1$, un fil 20 et un axe $O_2$ ont été référencés sur le dessin. Dans chacune des couches 1 ou 2 les fils 10 ou 20 sont enroulés dans le même sens et avec le même pas, ces pas étant appelés $P_1$ pour la couche 1 et $P_2$ pour la couche 2.

La définition connue du pas représente la longueur, mesurée parallèlement à l'axe de l'assemblage, au bout de laquelle un fil ayant ce pas effectue un tour complet autour de l'axe O de l'assemblage. Si on sectionne l'axe O par deux plans perpendiculaires à l'axe O et séparés par une longueur égale au pas d'un fil 10 ou 20 d'une des deux couches 1 ou 2, l'axe de ce fil 10 ou 20 a dans ces deux plans la même position sur les deux cercles $C_1$ ou $C_2$ correspondant à la cou-

che 1 ou 2 du fil considéré.

Les couches 1 et 2 sont adjacentes car les fils 10 de la couche 1 sont au contact des fils 20 de la couche 2. Les couches 1 et 2 ont le même sens d'enroulage, c'est-à-dire que tous les fils 10, 20 de l'ensemble des couches 1 et 2 sont enroulés autour de l'axe O soit dans le sens S soit dans le sens Z.

Conformément à l'invention, on a la relation

$$P_1 > P_2 > P_1 \times [1 - 2 (R_2 - R_1) / R_2]$$

c'est-à-dire en particulier que la couche extérieure 2 est posée à un pas plus court que celui de la couche intérieure 1.

Dans cet exemple on a donc "i" égal à 1 et "j" égal à 2.

Les fils A, 10, 20 peuvent avoir des diamètres identiques ou différents entre eux. Dans chaque couche 1, 2 les fils 10, 20 de cette couche ont pratiquement le même diamètre entre eux.

A titre d'exemple de réalisation, le toron 100 présente les caractéristiques suivantes :

- Diamètre du fil A servant d'âme : 0,195 mm,
- Diamètre des six fils 10 de la couche 1 : 0,175 mm ; rayon d'enroulement $R_1$ de cette couche 1 : 0,185 mm ; pas $P_1$ de cette couche 1 : 14,8 mm ;
- Diamètre des douze fils 20 de la couche 2 : 0,175 mm ; rayon d'enroulement $R_2$ de cette couche 2 : 0,36 mm ; pas $P_2$ de cette couche 2 : 7,6 mm.

Les fils 10 de la couche 1 et les fils 20 de la couche 2 sont enroulés autour de l'axe O dans le sens Z. Les fils A, 10, 20 sont tous en acier, revêtu d'une couche de laiton.

Cet assemblage est bien conforme à l'invention, car les deux couches concentriques 1 et 2 sont enroulées dans le même sens et on a bien $P_2$ (7,6 mm) compris entre $P_1$ (14,8mm) et $P_1 \times [1-2 \times (R_2-R_1)/R_2]$ qui est égal à 0,4 mm.

D'autre part, on a pratiquement la relation $P_2 = P_1 \times (R_1/R_2)$

On réalise d'autre part un assemblage connu comportant les mêmes fils que l'assemblage 100, mais avec la disposition suivante :

- il comporte une âme constituée par un seul fil de diamètre 0,195 mm ;
- il comporte une première couche de six fils de diamètre 0,175 mm, cette couche adjacente à l'âme ayant un pas de 10 mm ;
- il comporte une deuxième couche de douze fils disposée autour de la première couche et adjacente à cette première couche, le pas d'enroulement de cette deuxième couche étant de 10 mm.

Les fils de la première couche et de la deuxième couche sont enroulés dans le sens Z.

Cet assemblage connu n'est pas conforme à l'invention puisque les deux couches concentriques adjacentes ont le même pas égal à 10 mm.

L'assemblage 100 et l'assemblage connu sont incorporés chacun de la même manière dans un article en caoutchouc pour renforcer cet article que l'on vulcanise. Cet article est une courroie sans fin, et lorsque la courroie est disposée de façon à former un cylindre de révolution, l'assemblage forme un enroulement en hélice de même axe que ce cylindre.

On obtient donc deux articles identiques, à l'exception des assemblages de renfort.

On fait subir à ces deux articles les mêmes sollicitations de la façon suivante. On fait tourner chaque courroie autour de deux galets, de telle sorte que chaque portion élémentaire de l'assemblage soit soumise à une tension de 188 N et subisse des cycles de variation de courbure qui la font passer d'un rayon de courbure infini à un rayon de courbure de 40 mm, et ceci pendant dix huit millions de cycles. A la fin de ces sollicitations, on extrait de la même façon les assemblages des articles par décorticage, et on mesure la force de rupture des fils de la deuxième couche des assemblages ayant été sollicités.

On réalise d'autre part deux courroies identiques aux précédentes, l'une renforcée avec un assemblage 100, l'autre avec un assemblage connu précédemment décrit, et on décortique de la même façon que précédemment ces courroies, mais cette fois sans les soumettre à des sollicitations, et on mesure la force de rupture des fils de la deuxième couche des assemblages, ces mesures servant ainsi de témoin, cette force de rupture étant pratiquement la même pour l'assemblage 100 et pour l'assemblage connu, soit environ 130daN.

Les deux couches de ces deux assemblages sont adjacentes. La deuxième couche, la plus extérieure, n'est en contact qu'avec la première couche, l'examen de la force de rupture des fils de cette couche extérieure montre donc de façon pure l'effet de l'invention.

On constate que la réduction de la force de rupture due aux sollicitations est la suivante :

- 4,25 % en moyenne pour les assemblages connus ;
- 1,4 % en moyenne pour les assemblages conformes à l'invention.

L'invention permet donc de façon inattendue d'éviter dans une large mesure la réduction de la force de rupture des fils des assemblages. Cette réduction constatée dans les assemblages correspond à la diminution de section des fils par suite de leur usure.

D'autre part l'usure des fils est représentative d'un intense travail des forces de contact et d'une augmentation des contraintes de traction au sein du métal qui les compose. Ainsi l'invention permet de réduire très notablement la fatigue des assemblages.

Les assemblages conformes à l'invention peuvent être utilisés tels quels pour renforcer des articles, par exemple sous forme de câbles constitués par un seul toron 100, ou ils peuvent être combinés à d'autres assemblages, par exemple à d'autres assemblages conformes à l'invention, notamment pour réaliser des câbles comprenant plusieurs torons 100 tordus entre eux.

De préférence, les assemblages conformes à l'invention sont utilisés pour réaliser des nappes carcasse d'enveloppes de pneumatiques pour véhicules poids lourds, pour véhicules industriels, ou pour véhicules de génie civil.

Les assemblages conformes à l'invention peuvent être réalisés avec des procédés et des dispositifs connus qui ne sont pas décrits ici dans un but de simplification.

Les assemblages précédemment décrits étaient réalisés avec des fils métalliques, mais on peut envisager d'utiliser des matières minérales ou organiques, ou des matières diverses.

Bien entendu, l'invention n'est pas limitée aux exemples de réalisation précédemment décrits. C'est ainsi par exemple que l'invention s'applique au cas où au moins une partie des fils de l'assemblage ne sont pas métalliques, par exemple lorsque l'âme est en matière plastique, les autres fils étant métalliques. D'autre part, l'âme peut être constituée par plusieurs fils, cette âme étant par exemple constituée par une couche vérifiant avec une couche adjacente les relations précitées. L'invention s'applique aussi au cas où les assemblages comportent plus de deux couches, le nombre de couches pouvant par exemple atteindre ou même dépasser quatre, au moins deux de ces couches vérifiant les relations précitées. D'autre part le nombre des fils et les pas peuvent être différents de ceux décrits.

## Revendications

1. Assemblage de fils pour renforcer un article en matière plastique et/ou en caoutchouc, cet assemblage qui comporte au moins deux couches de fils étant caractérisé par les points suivants :

   a) il comporte au moins deux couches concentriques et adjacentes de fils autour d'un axe commun, chaque couche comportant au moins deux fils, celle de ces deux couches la plus proche de l'axe étant référencée "i" et celle de ces deux couches la plus éloignée de l'axe étant référencée "j" ; en coupe plane perpendiculaire à cet axe, dans chacune de ces deux couches les fils ont leurs axe disposés pratiquement sur un cercle, les rayons de ces cercles étant référencés $R_i$ pour la couche "i" et "$R_j$ pour la couche "j" ; dans chacune de ces deux couches, les fils sont enroulés dans le même sens et avec le même pas, ces pas étant référencés respectivement $P_i$ pour la couche "i" et $P_j$ pour la couche "j" ;
   b) les couches "i" et "j" ont le même sens d'enroulage ;
   c) $R_i$, $R_j$, $P_i$, $P_j$ vérifient la relation :

   $$P_i > P_j > P_i \times [1 - 2 (R_j - R_i) / R_j]$$
   $R_i$, $R_j$, $P_i$, $P_j$ étant exprimés avec la même unité de longueur.

2. Assemblage conforme à la revendication 1, tel que l'on a pratiquement la relation $P_j = P_i \times (R_i/R_j)$.

3. Assemblage selon l'une quelconque des revendications 1 ou 2, caractérisé en ce que les fils d'une couche quelconque ont le même diamètre.

4. Assemblage selon l'une quelconque des revendications 1 à 3, caractérisé en ce que les fils sont en acier.

5. Assemblage complexe comportant au moins deux assemblages, dont au moins un est conforme à l'une quelconque des revendications 1 à 4.

6. Article en matière plastique et/ou en caoutchouc renforcé par au moins un assemblage, ou assemblage complexe, conformes à l'une quelconque des revendications 1 à 5.

7. Article selon la revendication 6 caractérisé en ce qu'il est une enveloppe de pneumatique.

8. Enveloppe de pneumatique selon la revendication 7, caractérisée en ce qu'elle est une enveloppe de pneumatiques pour véhicule poids lourd, pour véhicule industriel ou pour véhicule de génie civil, l'assemblage étant utilisé pour réaliser au moins une nappe carcasse.

## Patentansprüche

1. Fadenverbundmaterial zur Verstärkung von Gegenständen aus Kunststoff und/oder aus Kautschuk, das mindestens zwei Lagen von Fäden aufweist,

   gekennzeichnet durch folgende Merkmale:

   a) Es weist mindestens zwei konzentrische und aneinanderliegende und um eine gemeinsame Achse herum angeordnete Lagen von Fäden auf, wobei

   jede Lage mindestens zwei Fäden aufweist und die achsnähere Lage mit "i" und die achsfernere Lage mit "j" bezeichnet sind,

   in jeder dieser beiden Lagen in einer Querschnittsebene senkrecht zu dieser Achse

   die Achsen der zugehörigen Fäden praktisch auf einem Kreis liegen, wobei die Radien dieser Kreise für die Lage "i" mit Ri und für die Lage "j" mit Rj bezeichnet sind, und

in jeder dieser beiden Lagen die Fäden im gleichen Sinn und mit gleicher Steigung gewickelt sind, wobei die Steigung für die Lage "i" mit Pi und die Steigung für die Lage "j" mit Pj bezeichnet sind,

b) die Lagen "i" und "j" im gleichen Sinn gewickelt sind und

c) Ri, Rj, Pi und Pj der Beziehung

$$P_i > P_j > P_i \times [1 - 2(R_j - R_i)/R_j]$$

genügen, wobei Ri, Rj, Pi und Pj in der gleichen Längeneinheit ausgedrückt sind.

2. Fadenverbundmaterial nach Anspruch 1, das so ausgebildet ist, daß praktisch die Beziehung $P_j = P_i \times (R_i/R_j)$ erfüllt ist.

3. Fadenverbundmaterial nach Anspruch 1 oder 2, dadurch gekennzeichnet, daß die Fäden einer beliebigen Lage den gleichen Durchmesser aufweisen.

4. Fadenverbundmaterial nach einem der Ansprüche 1 bis 3, dadurch gekennzeichnet, daß die Fäden aus Metall bestehen.

5. Komplexes Fadenverbundmaterial, das mindestens zwei Fadenverbundmaterialien aufweist, von denen mindestens eines ein Fadenverbundmaterial nach einem der Ansprüche 1 bis 4 ist.

6. Gegenstand aus Kunststoff und/oder Kautschuk, der mit mindestens einem Fadenverbundmaterial oder mindestens einem komplexen Fadenverbundmaterial nach einem der Ansprüche 1 bis 5 verstärkt ist.

7. Gegenstand nach Anspruch 6, dadurch gekennzeichnet, daß es der Mantel eines Luftreifens ist.

8. Mantel eines Luftreifens nach Anspruch 7, dadurch gekennzeichnet, daß er für Schwerlastfahrzeuge, Industriefahrzeuge oder Baufahrzeuge vorgesehen ist und mindestens eine Lage der Karkasse unter Verwendung des Fadenverbundmaterials hergestellt ist.

**Claims**

1. An assembly of filaments for reinforcing an article of plastic material and/or rubber, this assembly, which comprises at least two layers of filaments, being characterised by the following features:

(a) it comprises at least two adjacent concentric layers of filaments around a common axis, each layer comprising at least two filaments, the one of these two layers which is closest to said axis being designated "i" and the one of these two layers which is furthest from the axis being designated "j"; in a plane section perpendicular to this axis the filaments in each of these two layers have their axes arranged practically on a circle, the radii of these circles being designated $R_i$ in the case of layer "i" and $R_j$ in the case of layer "j"; in each of these two layers, the filaments are wound in the same direction and with the same pitch, these pitches being designated, respectively, $P_i$ in the case of layer "i" and $P_j$ in the case of layer "j";

(b) layers "i" and "j" have the same direction of winding;

(c) $R_i$, $R_j$, $P_i$, $P_j$ satisfy the relationship:

$$P_i > P_j > P_i \times [1 - 2(R_j - R_i)/R_j]$$

$R_i$, $R_j$, $P_i$, $P_j$ being expressed in the same unit of length.

2. An assembly according to Claim 1, such that the relationship $P_j = P_i \times (R_i/R_j)$ is substantially satisfied.

3. An assembly according to any one of Claims 1 or 2, characterised in that the filaments of any layer are of the same diameter.

4. An assembly according to any one of Claims 1 to 3, characterised in that the filaments are metallic wires.

5. A complex assembly comprising at least two assemblies, at least one of which is in accordance with any one of Claims 1 to 4.

6. An article of plastic material and/or rubber, reinforced by at least one assembly, or complex assembly, which is in accordance with any one of Claims 1 to 5.

7. An article according to Claim 6, characterised in that it is a pneumatic tyre.

8. A pneumatic tyre according to Claim 7, characterised in that it is a pneumatic tyre for heavy vehicles, industrial vehicles or construction vehicles, the assembly being used in order to produce at least one carcass ply.

Figure